# EUROPEAN PATENT SPECIFICATION

(11) **EP 2 172 353 B1**
(45) Date of publication and mention of the grant of the patent: **29.12.2010**
(21) Application number: 08425646.0
(22) Date of filing: 02.10.2008
(51) Int. Cl.: B60H 1/00, B60H 1/34, B62D 33/06

(54) **Diffused ventilation system for cabs of agricultural tractors, harvesters, earth-moving machines or the like**
Indirektes Belüftungssystem für Kabinen landwirtschaftlicherTraktoren, Erntefahrzeuge, Erdbewegungsmaschinen oder ähnlichen
Système à ventilation diffusée pour cabines de tracteurs agricoles, moissonneuses, engins de terrassement ou similaires

(43) Date of publication of application: 07.04.2010
(73) Proprietor: C.R.F. Società Consortile per Azioni, 10043 Orbassano (Torino) (IT)
(72) Inventor: Boreanaz, Giovanni, 10043 Orbassano (Torino) (IT); Mattiello, Fabrizio, 10043 Orbassano (Torino) (IT); Ruspa, Cecilia, 10043 Orbassano (Torino) (IT); Storgato, Angelo, 10043 Orbassano (Torino) (IT)
(74) Representative: Notaro, Giancarlo

(56) References cited:
- EP-A- 0 438 076
- JP-A- 8 119 155
- JP-A- 2001 063 343
- JP-A- 2002 321 518
- JP-A- 2004 338 457
- JP-A- 2007 245 894
- US-A- 4 365 541
- US-A- 4 531 453
- US-A1- 2006 186 224
- US-A1- 2008 128 107

## Description

The present invention relates to a cab of the type indicated in claim 1.

A cab of this type is disclosed in JP 2007 24 58 94.

The object of the present invention is that of providing a ventilation system ensuring a diffused and homogeneous distribution of the air within the inner space of the cab and further enabling the operator to obtain a high efficiency of ventilation during thermal transient periods (such as after a start following a long stop under high solar exposure), as well as the maximum comfort in stationary thermal conditions.

A further purpose of the invention is that of achieving the above indicated objects with relatively simple means, able to be adapted also on vehicles which are not originally provided with the system according to the invention.

In view of achieving these objects, the invention provides a cab according to claim 1 and a ventilation method according to claim 4.

Preferably, the outflow vents are also provided with louvers which can be oriented upwardly or downwardly, so that it also possible to orient all vents upwardly or downwardly, to obtain a desired condition of ventilation.

In the preferred embodiment, said air ducts extend starting from an air conditioning unit which on its turn receives air through one or more inlet ducts starting from air intakes located at the rear window pane of the cab.

Due to the above indicated features, the system according to the invention ensures an efficient diffused and homogeneous ventilation of the interior space of the cab during stationary thermal conditions, thanks to the possibility of orienting all the vents according to a clockwise or anti-clockwise arrangement. This mode of use can be adopted by setting the ventilation unit so as to impress a medium-low speed to the air. Instead, during thermal transient periods, when it is necessary to rapidly reach a comfortable temperature within the cab starting from an excessively high temperature or an excessively low temperature, the outflow vents can be oriented towards the centre of the cab and the ventilation unit can be set so as to impress a high speed to the air coming out from the vents.

By providing ducts which extend parallel and adjacent to the four uprights of the cab frame, on one hand it is possible to arrange the vents in an ideal position and on the other hand it is also possible to use the space within the uprights, which are normally constituted by hollow profiles, for guiding electric cables, as it is generally done.

In a further embodiment, each upright and the air duct adjacent thereto are together enveloped within a single casing (not shown) provided with an aperture sufficient for ensuring freedom of orientation to the vent.

Studies and tests conducted by the applicant have shown that the above indicated advantages of the system according to the invention provide a high comfort for the operator.

Further features and advantages of the invention will become apparent from the following description with reference to the annexed drawings, given purely by way of non limiting example, in which:
- figure 1 is a perspective view of an agricultural tractor having a cab according to the present invention,
- figure 2 shows the supporting frame of the cab of the tractor of figure 1 and some parts of the system according to the invention,
- figures 3, 4 are further perspective views which show further details of the ventilation system for the cab of the vehicle of figure 1, and
- figure 5 is a diagrammatic plan view of the supporting structure of figure 2, in which the diffused circulation of air is indicated, which can be obtained by means of the system according to the invention.

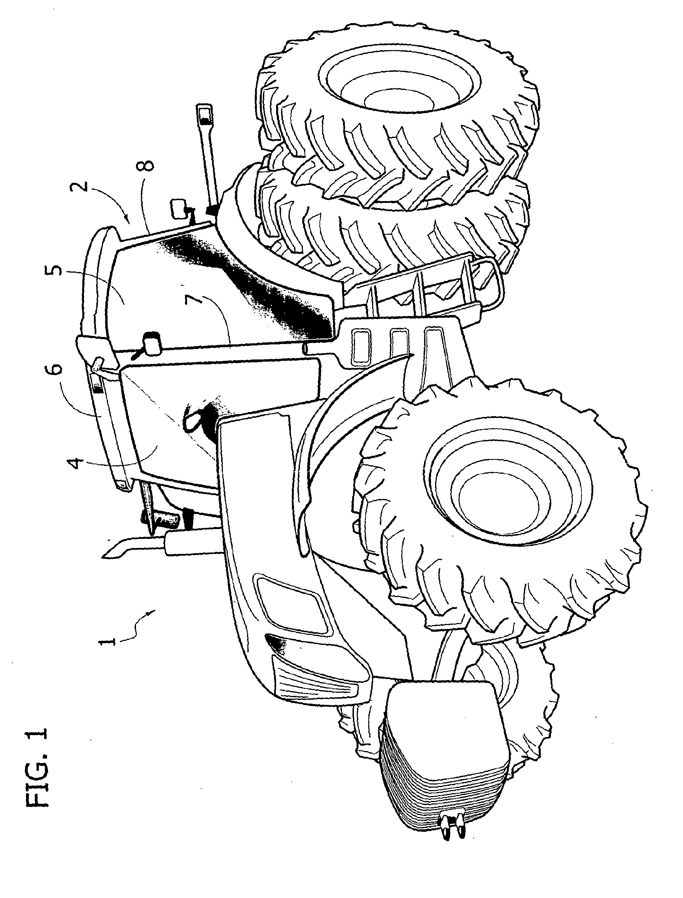

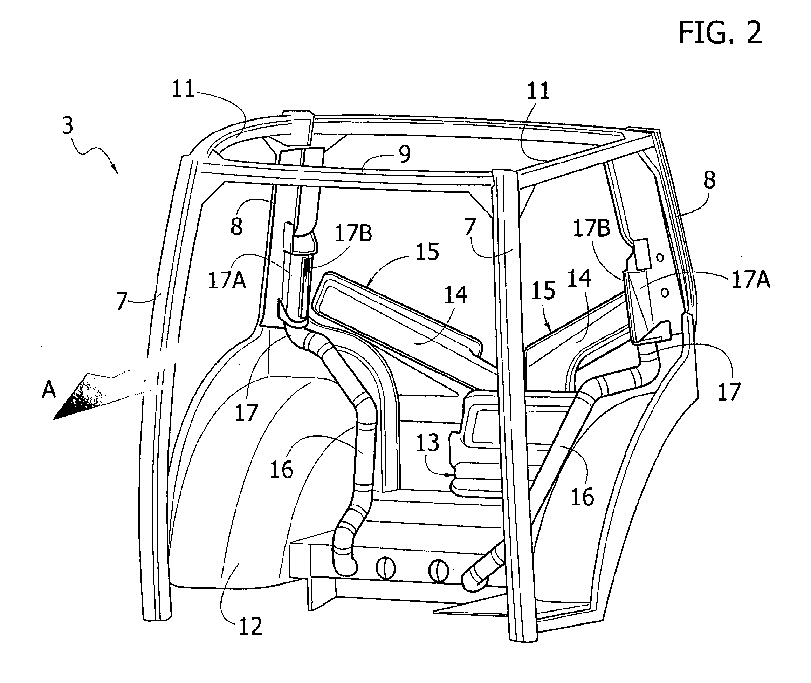

Figure 1 is a perspective view of an agricultural tractor of a type known per se, specifically the tractor model CCM produced and marketed by the company Case New Holland. This tractor, generally designated by reference numeral 1 in figure 1, comprises a cab 2 for the operator, including a supporting structure or frame 3, better visible in figure 2, to which there are associated a front windshield 4, two side window panes 5 (only one of which is visible in figure 1) and a rear window pane (not visible in the drawings) as well as a roof 6.

With reference to figure 2, the supporting structure 3 of the cab includes two front uprights 7 and two rear uprights 8. The uprights 7 and 8 are connected at their upper ends by a front cross-member 9, a rear cross-member 10 and two side longitudinal beams 11. The lower ends of uprights 7, 8 are connected to a floor structure 12, which in the case of the vehicle illustrated herein includes wheel-surrounding portions (figure 1).

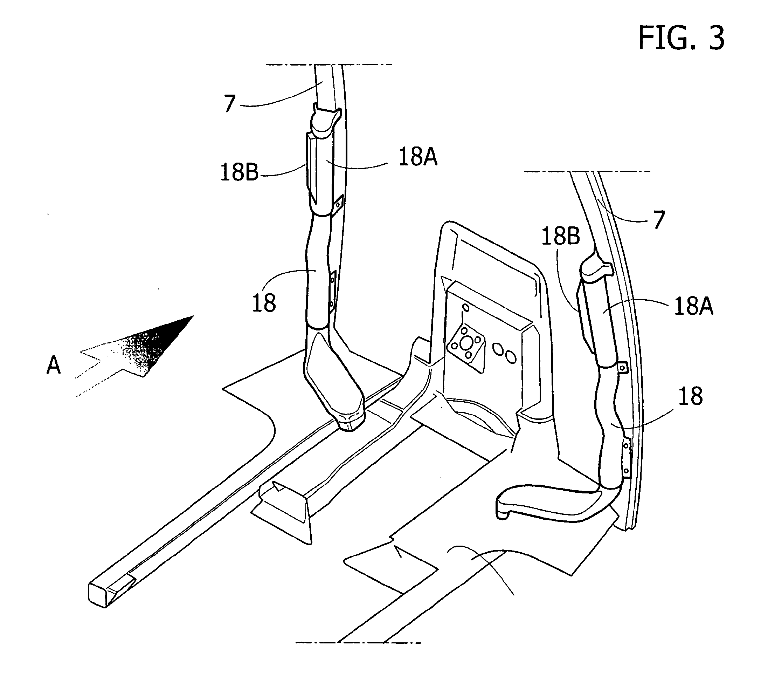

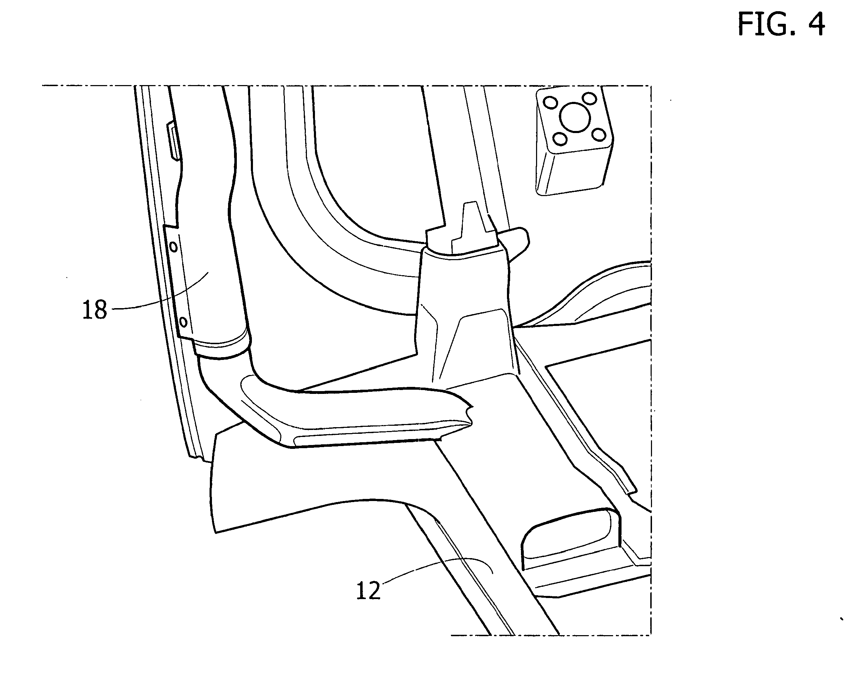

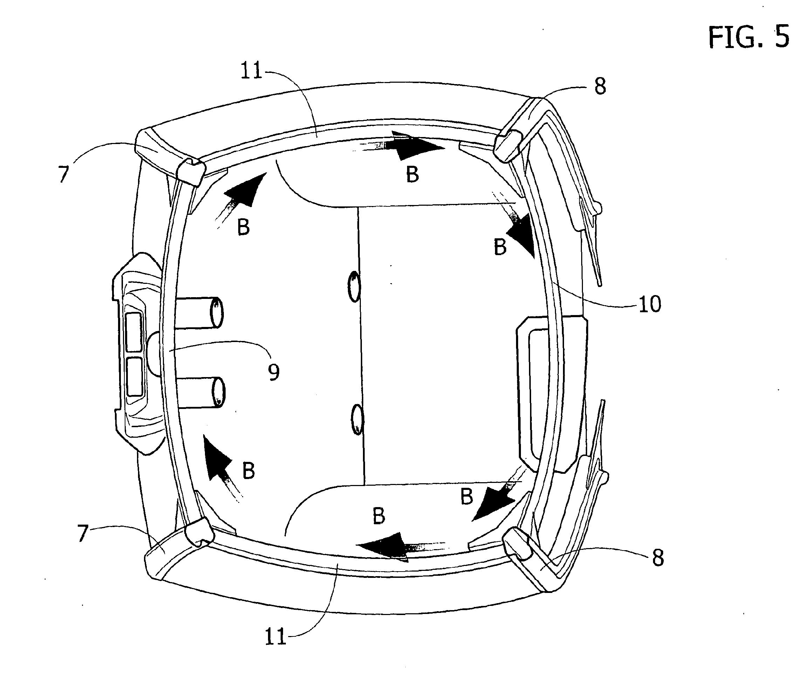

With reference to figure 2, numeral 13 designates an air conditioning unit, which can be made according to any known technology, including an air conditioning device and a heating device. The details of construction of unit 13 are not described nor shown herein since, as already indicated, this unit can be made according to any known art and also because these aspects, taken alone, do not fall within the scope of the present invention. The air conditioning unit 13 receives air through two guiding ducts 14 which extend from air intakes 15 which are associated to the rear window pane of the cab (in figure 2 arrow A indicates the forward direction of the vehicle). Intakes 15 can be made in any known way and in particular they can include filtering elements for the air to be supplied to the conditioning unit 13. It is to be understood that the air intakes could also be arranged in a position different form that shown herein, i.e. they could be arranged not on the rear window pane. From the conditioning unit there extend ducts 16 for guiding the conditioned air supplied by unit 13, having terminal portions 17 which extend parallel and adjacent to the two rear uprights 8. Also from the conditioning unit 13 there extend two further ducts whose terminal portions, designated by 18 in figures 3, 4, extend parallel and adjacent to the two front uprights 7. Each of the ducts 17, 18 extend from the bottom upwardly up to an outflow vent, respectively designated by 18A and 17B, which is substantially constituted by a duct portion which can be oriented around an axis substantially coincident with the axis of the respective duct and having an outflow aperture, respectively designated by 17B and 18B, substantially elongated along the vertical direction. Each outflow aperture of the two vents 17A, 18A can be oriented towards one of the two window panes adjacent thereto, for instance for demisting the window pane, or it can be oriented radially towards the centre of the cab, when it is necessary to obtain maximum ventilation power during thermal transient periods, or also the four vents can be oriented according to a clockwise or anti-clockwise orientation, viewed from above (figure 5), so as to generate a continuous circulation of air at a medium-low speed, during stationary thermal conditions, in order to generate a sort of bubble of circulating air which surrounds the operator and produces a diffused and homogeneous ventilation within the cab.

Preferably, the outflow vents are also provided with louvers (not shown) which can be oriented upwardly or downwardly, so that it is possible to orient the vents all upwardly or downwardly.

It is also possible to provide each vent with an auxiliary slot (not shown), so that in some cases where it is necessary to obtain simultaneous demisting of all window panes, the front vents can be oriented towards the front window pane, but have their auxiliary slots oriented towards the side window panes.

Tests carried out by the applicant have shown that this type of ventilation gives a maximum comfort to the user.

As already indicated above, it is possible to provide a single housing containing each of the uprights 7, 8 and the respective air duct associated thereto, with an aperture sufficiently large to enable the movement of the outflow vent.

Naturally, while the principle of the invention remains the same, the details of construction and the embodiments may widely vary with respect to what has been described and illustrated purely by way of example, without departing from the scope of the present invention.

The above mentioned outflow vents (17A, 18A) are provided with electric actuators for orientation thereof, these actuators being controlled by electronic control means on the basis of a command imparted by the operator.

According to the invention, the above mentioned electronic control means are programmed to automatically cause the four vents to be positioned according to different modes of use as a result of the command imparted by the user, to provide various functions, such as demisting of the window panes, maximum ventilation during thermal transient periods, or "bubble" ventilation in stationary thermal conditions.

## Claims

1. Cab for agricultural tractors or harvesters, earth-moving machines or the like,
wherein said cab comprises:
- a supporting frame (3) including two front uprights (7) and two rear uprights (8) having their upper ends connected to each other by a front cross-member (9), a rear cross-member (10) and two side longitudinal beams (11),
- a front window pane (4) connected to the two front uprights (7), a rear window pane connected to the two rear uprights (8) and two side window panes (5) each connected to a respective front upright (7) and a respective rear upright (8),
- said cab (2) being further provided with a ventilation system including a plurality of air ducts (17, 18) for guiding ventilation air and opening into vents (17A, 17B) for the outflow of air within the cab,
- wherein each of said air ducts (17, 18) for guiding ventilation air is associated to a respective one of said uprights (7, 8) of the supporting frame (3) of the cab (2), so that each air duct (17, 18) extends parallel and adjacent to the respective upright (7, 8), and
- wherein the outflow vent (17A,17B; 18A,18B) of each of said air ducts (17, 18) comprises a duct section which can be oriented around an axis substantially coincident with the axis of the duct and having an outflow aperture (17B, 18B) substantially elongated along the vertical direction,
**characterized in that** at least four air ducts (17,18) are provided respectively arranged to said two front uprights (7) and said two rear uprights (8),
**in that** said outflow vents (17A, 18A) are provided with electric actuators for orientation thereof, said actuators being controlled by electronic control means on the basis of a command imparted by the operator, and
**in that** said electronic control means are programmed to automatically provide positioning of the four vents so that:
- each of said outflow vents (17A, 18A) is oriented towards one of the two window panes of the cab which are adjacent thereto, in a first mode for demisting the window panes,
- each of said outflow vents (17A, 18A) is oriented radially towards the centre of the cab, in a second mode, for maximum ventilation during thermal transient periods, and
- said outflow vents (17A, 18A) are all oriented according to a common clockwise or anti-clockwise arrangement, so as to generate a continuous circulation of air which produces a sort of bubble of circulating air surrounding the operator, in order to obtain maximum comfort for the operator, in a third mode, for stationary thermal conditions.

2. Cab according to claim 1, **characterized in that** said ventilation system comprises at least one duct (14) for guiding air towards the air conditioning unit (13), said duct extending from an air intake located at the rear window pane of the cab.

3. Cab according to any of the previous claims, **characterized in that** one or moreof said outflow vents (17A,18A) are provided with louvers which can be oriented upwardly or downwardly.

4. Method for controlling ventilation within a cab for agricultural tractors or harvesters, earth-moving machines or the like,
wherein said cab comprises:
- a supporting frame (3) including two front uprights (7) and two rear uprights (8) having their upper ends connected to each other by a front cross-member (9), a rear cross-member (10) and two side longitudinal beams (11),
- a front window pane (4) connected to the two front uprights (7), a rear window pane connected to the two rear uprights (8) and two side window panes (5) each connected to a respective front upright (7) and a respective rear upright (8),
- said cab (2) being further provided with a ventilation system including a plurality of air ducts (17, 18) for guiding ventilation air and opening into vents (17A, 17B) for the outflow of air within the cab,
- wherein each of said air ducts (17, 18) for guiding ventilation air is associated to a respective one of said uprights (7, 8) of the supporting frame (3) of the cab (2), so that each air duct (17, 18) extends parallel and adjacent to the respective upright (7, 8), and
- wherein the outflow vent (17A,17B; 18A, 18B) of each of said air ducts (17, 18) comprises a duct section which can be oriented around an axis substantially coincident with the axis of the duct and having an outflow aperture (17B, 18B) substantially elongated along the vertical direction,
**characterized in that** at least four air ducts (17,18) are provided respectively arranged to said two front uprights (7) and said two rear uprights (8),
**in that** said outflow vents (17A, 18A) are controlled by electronic control means so that:
- each of said outflow vents (17A, 18A) is oriented towards one of the two window panes of the cab which are adjacent thereto, in a first mode for demisting the window panes,
- each of said outflow vents (17A, 18A) is oriented radially towards the centre of the cab, in a second mode, for maximum ventilation during thermal transient periods, and
- said outflow vents (17A, 18A) are all oriented according to a common clockwise or anti-clockwise arrangement, so as to generate a continuous circulation of air which produces a sort of bubble of circulating air surrounding the operator, in order to obtain maximum comfort for the operator, in a third mode, for stationary thermal conditions.

## Patentansprüche

1. Kabine für landwirtschaftliche Traktoren oder Erntemaschinen, Erdbewegungsmaschinen oder dergleichen,
wobei die Kabine umfasst:
einen Stützrahmen (3), der zwei vordere Stehholme (7) und zwei hintere Stehholme (8) beinhaltet, deren obere Enden miteinander durch ein vorderes Querelement (9), ein hinteres Querelement (10) und zwei Seitenlängsträger (11) verbunden sind, eine vordere Fensterscheibe (4), die mit den beiden vorderen Stehholmen (7) verbunden ist, eine hintere Fensterscheibe, die mit den beiden hinteren Stehholmen (8) verbunden ist, und zwei Seitenfensterscheiben (5), die jeweils mit einem jeweiligen vorderen Stehholm (7) und einem jeweiligen hinteren Stehholm (8) verbunden sind,
wobei die Kabine (2) des Weiteren mit einem Belüftungssystem versehen ist, das eine Mehrzahl von Luftkanälen (17, 18) beinhaltet, die Belüftungsluft führen und sich in Öffnungen (17A, 17B) für das Ausströmen von Luft in das Innere der Kabine öffnen,
wobei jeder von den Luftkanälen (17, 18) zum Führen von Belüftungsluft einem jeweiligen der Stehholme (7, 8) des Stützrahmens (3) der Kabine (2) derart zugeordnet ist, dass sich jeder Luftkanal (17, 18) parallel und benachbart zu dem jeweiligen Stehholm (7, 8) erstreckt, und
wobei die Ausströmöffnung (17A, 17B; 18A, 18B) eines jeden der Luftkanäle (17, 18) einen Kanalabschnitt umfasst, der um eine Achse im Wesentlichen koinzident zur Achse des Kanals orientiert sein kann und einen Ausströmdurchlass (17B, 18B) aufweist, der sich im Wesentlichen entlang der vertikalen Richtung längserstreckt,
**dadurch gekennzeichnet,**
**dass** wenigstens vier Luftkanäle (17, 18) vorgesehen sind, die jeweils an den beiden vorderen Stehholmen (7) und den beiden hinteren Stehholmen (8) angeordnet sind,
**dass** die Ausströmöffnungen (17A, 18A) mit elektrischen Betätigern zu deren Orientierung versehen sind, wobei die Betätiger durch elektronische Steuermittel auf Grundlage eines von dem Bediener gegebenen Befehls gesteuert werden, und dass die elektronischen Steuermittel dafür programmiert sind, eine Positionierung der vier Öffnungen automatisch derart bereitzustellen, dass:
jede von den Ausströmöffnungen (17A, 18A) hin zu einer der beiden Fensterscheiben der Kabine, die benachbart hierzu ist, in einem ersten Betriebszustand zur Entfernung eines Beschlages von den Fensterscheiben orientiert ist,
jede von den Ausströmöffnungen (17A, 18A) radial hin zur Mitte der Kabine in einem zweiten Betriebszustand zur maximalen Belüftung in Wärmeübergangszeiträumen orientiert ist und
die Ausströmöffnungen (17A, 18A) alle entsprechend einer gemeinsamen Anordnung im Uhrzeigersinn oder gegen den Uhrzeigersinn derart orientiert sind, dass eine kontinuierliche Luftzirkulation entsteht, die eine Art von den Bediener umgebender Hülle aus zirkulierender Luft erzeugt, um für den Bediener maximalen Komfort in einem dritten Betriebszustand für stationäre Wärmebedingungen zu schaffen.

2. Kabine nach Anspruch 1, **dadurch gekennzeichnet, dass** das Belüftungssystem wenigstens einen Kanal (14) zum Führen von Luft hin zu der Klimaanlageneinheit (13) umfasst, wobei sich der Kanal von einem Lufteinlass aus erstreckt, der an der hinteren Fensterscheibe der Kabine befindlich ist.

3. Kabine nach einem der vorhergehenden Ansprüche, **dadurch gekennzeichnet, dass** eine oder mehrere von den Ausströmöffnungen (17A, 18A) mit Lamellen versehen sind, die nach oben oder nach unten orientiert werden können.

4. Verfahren zum Steuern einer Belüftung im Inneren einer Kabine für landwirtschaftliche Traktoren oder Erntemaschinen, Erdbewegungsmaschinen oder dergleichen, wobei die Kabine umfasst:
einen Stützrahmen (3), der zwei vordere Stehholme (7) und zwei hintere Stehholme (8) beinhaltet, deren obere Enden miteinander durch ein vorderes Querelement (9), ein hinteres Querelement (10) und zwei Seitenlängsträger (11) verbunden sind, eine vordere Fensterscheibe (4), die mit den beiden vorderen Stehholmen (7) verbunden ist, eine hintere Fensterscheibe, die mit den beiden hinteren Stehholmen (8) verbunden ist, und zwei Seitenfensterscheiben (5), die jeweils mit einem jeweiligen vorderen Stehholm (7) und einem jeweiligen hinteren Stehholm (8) verbunden sind,
wobei die Kabine (2) des Weiteren mit einem Belüftungssystem versehen ist, das eine Mehrzahl von Luftkanälen (17, 18) beinhaltet, die Belüftungsluft führen und sich in Öffnungen (17A, 17B) für das Ausströmen von Luft in das Innere der Kabine öffnen,
wobei jeder von den Luftkanälen (17, 18) zum Führen von Belüftungsluft einem jeweiligen der Stehholme (7, 8) des Stützrahmens (3) der Kabine (2) derart zugeordnet ist, dass sich jeder Luftkanal (17, 18) parallel und benachbart zu dem jeweiligen Stehholm (7, 8) erstreckt, und
wobei die Ausströmöffnung (17A, 17B; 18A, 18B) eines jeden der Luftkanäle (17, 18) einen Kanalabschnitt umfasst, der um eine Achse im Wesentlichen koinzident zur Achse des Kanals orientiert sein kann und einen Ausströmdurchlass (17B, 18B) aufweist, der sich im Wesentlichen entlang der vertikalen Richtung längserstreckt,
**dadurch gekennzeichnet,**
**dass** wenigstens vier Luftkanäle (17, 18) vorgesehen sind, die jeweils an den beiden vorderen Stehholmen (7) und den beiden hinteren Stehholmen (8) angeordnet sind,
**dass** die Ausströmöffnungen (17A, 18A) von elektronischen Steuermitteln derart gesteuert werden, dass:
jede von den Ausströmöffnungen (17A, 18A) hin zu einer der beiden Fensterscheiben der Kabine, die benachbart hierzu ist, in einem ersten Betriebszustand zur Entfernung eines Beschlages von den Fensterscheiben orientiert ist,
jede von den Ausströmöffnungen (17A, 18A) radial hin zur Mitte der Kabine in einem zweiten Betriebszustand zur maximalen Belüftung in Wärmeübergangszeiträumen orientiert ist und
die Ausströmöffnungen (17A, 18A) alle entsprechend einer gemeinsamen Anordnung im Uhrzeigersinn oder gegen den Uhrzeigersinn derart orientiert sind, dass eine kontinuierliche Luftzirkulation entsteht, die eine Art von den Bediener umgebender Hülle aus zirkulierender Luft erzeugt, um für den Bediener maximalen Komfort in einem dritten Betriebszustand für stationäre Wärmebedingungen zu schaffen.

## Revendications

1. Cabine pour tracteurs agricoles ou moissonneuses, engins de terrassement ou similaires,
dans laquelle ladite cabine comprend :
un châssis de support (3) comprenant deux montants avant (7) et deux montants arrière (8) ayant leurs extrémités supérieures raccordées entre elles par une traverse avant (9), une traverse arrière (10) et deux poutres longitudinales latérales (11),
une vitre de fenêtre avant (4) raccordée aux deux montants avant (7), une vitre de fenêtre arrière raccordée aux deux montants arrière (8) et deux vitres de fenêtre latérales (5), chacune raccordée à un montant avant (7) respectif et à un montant arrière (8) respectif,
ladite cabine (2) étant en outre munie d'un système de ventilation comprenant une pluralité de conduits d'air (17, 18) pour guider l'air de ventilation et débouchant dans des conduits d'aération (17A, 17B) pour l'écoulement sortant de l'air à l'intérieur de la cabine,
dans laquelle chacun desdits conduits d'air (17, 18) pour guider l'air de ventilation est associé à un montant respectif desdits montants (7, 8) du châssis de support (3) de la cabine (2), de sorte que chaque conduit d'air (17, 18) s'étend parallèlement et de manière adjacente au montant (7, 8) respectif, et
dans laquelle le conduit d'aération d'écoulement sortant (17A, 17B ; 18A, 18B) de chacun desdits conduits d'air (17, 18) comprend une section de conduit qui peut être orientée autour d'un axe qui coïncide sensiblement avec l'axe du conduit et ayant une ouverture d'écoulement sortant (17B, 18B) sensiblement allongée le long de la direction verticale,
**caractérisée en ce que** l'on prévoit au moins quatre conduits d'air (17, 18) respectivement agencés sur lesdits deux montants avant (7) et lesdits deux montants arrière (8),
**en ce que** lesdits conduits d'aération d'écoulement sortant (17A, 18A) sont prévus avec des actionneurs électriques pour leur orientation, lesdits actionneurs étant commandés par des moyens de commande électroniques en fonction d'une commande transmise par l'opérateur, et
**en ce que** lesdits moyens de commande électroniques sont programmés pour fournir automatiquement le positionnement des quatre conduits d'aération de sorte que :
chacun desdits conduits d'aération d'écoulement sortant (17A, 18A) est orienté vers l'une des deux vitres de fenêtre de la cabine qui y sont adjacentes, dans un premier mode pour désembuer les vitres de fenêtre,
chacun desdits conduits d'aération d'écoulement sortant (17A, 18A) est orienté radialement vers le centre de la cabine, dans un deuxième mode pour la ventilation maximale pendant des périodes de transition thermique, et
lesdits conduits d'aération d'écoulement sortant (17A, 18A) sont tous orientés selon un agencement commun dans le sens des aiguilles d'une montre ou dans le sens inverse des aiguilles d'une montre, afin de générer une circulation continue d'air qui produit une sorte de bulle d'air de circulation qui entoure l'opérateur, afin d'obtenir le confort maximum pour l'opérateur, dans un troisième mode pour des conditions thermiques fixes.

2. Cabine selon la revendication 1, **caractérisée en ce que** ledit système de ventilation comprend au moins un conduit (14) pour guider l'air vers l'unité de conditionnement d'air (13), ledit conduit s'étendant à partir d'une admission d'air située au niveau de la vitre de fenêtre arrière de la cabine.

3. Cabine selon l'une quelconque des revendications précédentes, **caractérisée en ce qu'**un ou plusieurs desdits conduits d'aération d'écoulement sortant (17A, 18A) sont prévus avec des déflecteurs qui peuvent être orientés vers le haut ou vers le bas.

4. Procédé pour contrôler la ventilation dans une cabine pour les tracteurs agricoles ou les moissonneuses, les engins de terrassement ou similaires, dans lequel ladite cabine comprend :
un châssis de support (3) comprenant deux montants avant (7) et deux montants arrière (8) ayant leurs extrémités supérieures raccordées entre elles par une traverse avant (9), une traverse arrière (10) et deux poutres longitudinales latérales (11),
une vitre de fenêtre avant (4) raccordée aux deux montants avant (7), une vitre de fenêtre arrière raccordée aux deux montants arrière (8) et deux vitres de fenêtre latérales (5) chacune raccordée à un montant avant (7) respectif et à un montant arrière (8) respectif,
ladite cabine (2) étant en outre munie d'un système de ventilation comprenant une pluralité de conduits d'air (17, 18) pour guider l'air de ventilation et débouchant dans des conduits d'aération (17A, 17B) pour l'écoulement sortant de l'air à l'intérieur de la cabine,
dans lequel chacun desdits conduits d'air (17, 18) pour guider l'air de ventilation est associé à un montant respectif desdits montants (7, 8) du châssis de support (3) de la cabine (2), de sorte que chaque conduit d'air (17, 18) s'étend parallèlement et de manière adjacente au montant (7, 8) respectif, et
dans lequel le conduit d'aération d'écoulement sortant (17A, 17B ; 18A, 18B) de chacun desdits conduits d'air (17, 18) comprend une section de conduit qui peut être orientée autour d'un axe qui coïncide sensiblement avec l'axe du conduit et ayant une ouverture d'écoulement sortant (17B, 18B) sensiblement allongée le long de la direction verticale,
**caractérisé en ce que** l'on prévoit au moins quatre conduits d'air (17, 18) respectivement agencés sur lesdits deux montants avant (7) et lesdits deux montants arrière (8),
**en ce que** lesdits conduits d'aération d'écoulement sortant (17A, 18A) sont contrôlés par des moyens de commande électroniques, de sorte que :
chacun desdits conduits d'aération d'écoulement sortant (17A, 18A) est orienté vers l'une des deux vitres de fenêtre de la cabine qui y sont adjacentes, dans un première mode pour désembuer les vitres de fenêtre,
chacun desdits conduits d'aération d'écoulement sortant (17A, 18A) est orienté radialement vers le centre de la cabine, dans un deuxième mode, pour la ventilation maximale, pendant des périodes de transition thermique, et
lesdits conduits d'aération d'écoulement sortant (17A, 18A) sont tous orientés selon un agencement commun dans le sens des aiguilles d'une montre ou dans le sens inverse des aiguilles d'une montre, afin de générer une circulation continue d'air qui produit une sorte de bulle d'air de circulation qui entoure l'opérateur, afin d'obtenir le confort maximum pour l'opérateur, dans un troisième mode pour des conditions thermiques fixes.
